# EUROPÄISCHE PATENTSCHRIFT

(11) **EP 0 423 634 B1**
(45) Veröffentlichungstag und Bekanntmachung des Hinweises auf die Patenterteilung: **24.11.1993**
(21) Anmeldenummer: 90119579.2
(22) Anmeldetag: 12.10.1990
(51) Int. Cl.: F16K 3/08, F16K 27/04

(54) **Absperr- und Regulierventil**
Stop and regulating valve
Vanne d'arrêt et de régulation

(30) Priorität: 20.10.1989 DE 3934976
(43) Veröffentlichungstag der Anmeldung: 24.04.1991
(73) Patentinhaber: FRIEDRICH GROHE AKTIENGESELLSCHAFT, D-58675 Hemer (DE)
(72) Erfinder: Wagner, Friedrich, W-7833 Endingen (DE); Grau, Walter, W-7638 Mahlberg (DE)

(56) Entgegenhaltungen:
- US-A- 2 923 318

## Beschreibung

Die Erfindung betrifft ein Absperr- und Regulierventil, insbesondere für Wasserarmaturen, mit den im Oberbegriff des Anspruchs 1 angegebenen Merkmalen. Ein Ventil dieser Gattung ist bekannt (DE 31 07 431A1). Bei diesem Ventil ist die Ausbildung der Ventilspindel und die Zuordnung der Ventilscheiben relativ kompliziert aufgebaut. Außerdem erfordert die Verbindung zwischen der Ventilspindel und der aus Hartstoff bestehenden Ventilregulierscheibe eine genaue Passung, um eine anzustrebende spielfreie Kupplung zu erreichen. Schließlich ist bei diesem bekannten Ventil die Anordnung und Ausbildung der Feder für die Erzeugung einer Vorspannung, mit der die Ventilregulierscheibe gegen die Ventilscheibe gedrückt wird, ungünstig.

Der Erfindung liegt die Aufgabe zugrunde, das eingangs beschriebene Ventil zu verbessern und insbesondere eine einfache und sichere Kupplung zwischen Ventilspindel und Ventilregulierscheibe zu schaffen. Hierbei gehört es mit zur Aufgabe, das Ventil so auszubilden, daß die Ventilregulierscheibe mit einfachen Mitteln in der Kupplungslage geschützt halterbar ist.

Diese Aufgabe wird erfindungsgemäß dadurch gelöst, daß die Ventilspindel am inneren Endbereich mit einem fußartigen Exzenter ausgebildet ist, und daß die Ventilregulierscheibe eine zur Dichtflächseite offene Nut aufweist, die durch die Ventilsitzscheibe überdeckt ist und die als Aufnahme für den Exzenter ausgebildet ist, der zur drehfesten Verbindung paßfederartig in diese Aufnahme einfaßt, wobei in der Ventilsitzscheibe wenigstens eine Durchtrittsöffnung derart bemessen ist, daß die Ventilspindel mit dem Exzenter hindurchführbar ist. Mit dieser Anordnung des als Spindelfuß ausgebildeten Exzenters wird eine günstige, formschlüssige Kupplung erreicht, die kein oder nur ein geringes Totspiel aufweist. Darüber hinaus ist eine wesentlich günstigere Krafteinleitung bei der Ventilbetätigung in die aus sprödem Hartstoff bestehende Ventilregulierscheibe ermöglicht. Durch eine seitliche Verbindung der Durchtrittsöffnung mit einer Ausnehmung für die Ventilspindel in der Ventilsitzscheibe ist ein einfaches Zusammenfügen gegeben.
Weitere Ausgestaltungen der Erfindung sind in den Ansprüchen 2 bis 10 angegeben.

Ein Ausführungsbeispiel der Erfindung ist in der Zeichnung dargestellt und wird im folgenden näher beschrieben. Es zeigt
- Figur 1: ein in einen Armaturenkörper einmontiertes Absperr- und Regulierventil im Längsschnitt;
- Figur 2: das Absperr- und Regulierventil gemäß Figur 1 in der Schnittebene II;
- Figur 3: eine Ventilsitzscheibe gemäß Figur 1 im Seitenschnitt;
- Figur 4: die Ventilsitzscheibe gemäß Figur 3 in Draufsicht;
- Figur 5: die Ventilregulierscheibe gemäß Figur 1 in Seitenschnitt;
- Figur 6: die Ventilregulierscheibe gemäß Figur 5 in Draufsicht;
- Figur 7: die Ventilspindel gemäß Figur 1 in Seitenansicht;
- Figur 8: die Ventilspindel gemäß Figur 7 in der Schnittebene VIII;
- Figur 9: die Ventilspindel gemäß Figur 7 in der Schnittebene IX;
- Figur 10: die Feder gemäß Figur 1 im Seitenschnitt;
- Figur 11: die Feder gemäß Figur 10 in Draufsicht.

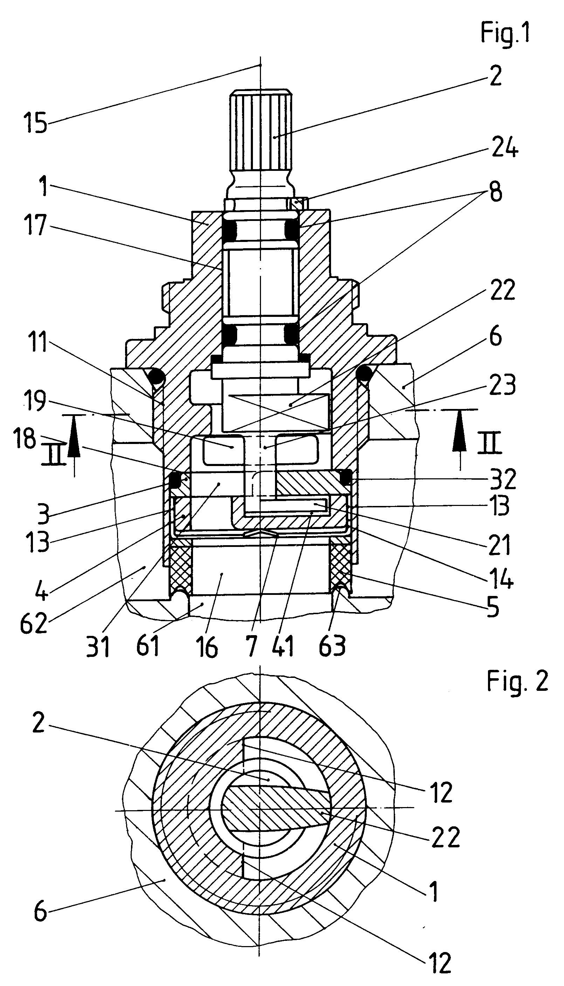

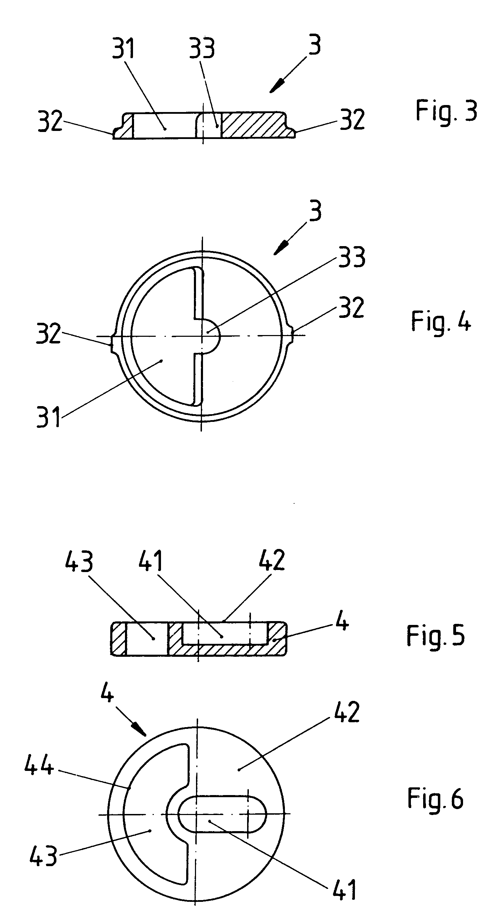

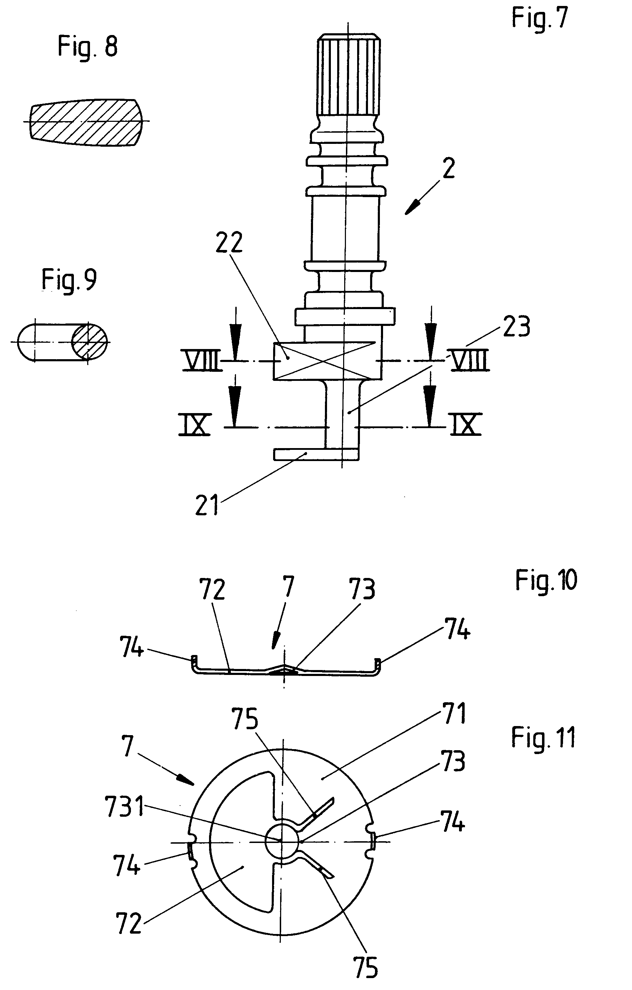

Das in den Figuren 1 und 2 gezeigte Absperr- und Regulierventil ist in einem zum Teil dargestellten Armaturenkörper 6 einmontiert. Das Ventil besteht im wesentlichen aus einem mit Gewinde 11, vorzugsweise 3/4'' Rohrgewinde, in den Armaturenkörper 6 einschraubbaren Gehäuse 1, in dem die Ventilelemente, wie Ventilspindel 2, Ventilsitzscheibe 3, Ventilregulierscheibe 4, Dichtelement 5 und Feder 7 als Baueinheit angeordnet sind. Das Ventilgehäuse 1 ist mit seinen Außenabmessungen so festgelegt, das es im Austausch für genormte Ventiloberteile mit einem axial verschiebbaren Verschlußglied alternativ in Sanitärarmaturenkörper 6 eingesetzt werden kann.
Koaxial zur Mittelachse 15 ist in dem Gehäuse 1 eine durchgehende Bohrung vorgesehen, wobei im äußeren, aus dem Armaturenkörper 6 vorkragenden Teil eine Lagerbohrung 17 für die Ventilspindel 2 ausgebildet ist, in der die Ventilspindel 2 mit O-Ringen 8 gedichtet gelagert ist. Im Anschluß an die Lagerbohrung 17 ist die Durchgangsbohrung in stromaufwärtiger Richtung stufenweise erweitert bis hin zur Eingangsöffnung 16, in der das Dichtelement 5 angeordnet ist.
Die stromabwärts angeordnete Ventilsitzscheibe 3 ist an einer äußeren Schulter 18 axial festliegend vom Gehäuse 1 aufgenommen, wobei die Abdichtung mit Hilfe eines O-Rings 32 erfolgt. Zur Drehsicherung faßt die Ventilsitzscheibe mit ohrenförmigen Vorsprüngen 32 (siehe Figur 3 und 4) in entsprechende Axialnuten 13 in das Gehäuse ein. Die Ventilsitzscheibe 3 weist eine Durchtrittsöffnung 31 mit einem Kreisbogen von etwas unter 180° auf, so daß in der Schließstellung noch eine hinreichende Überdeckung zwischen der Ventilsitzscheibe 3 und der Ventilregulierscheibe 4 gegeben ist. Konzentrisch in der Ventilsitzscheibe 3 ist außerdem eine halbrundförmige Ausnehrung 33 für den Durchtritt der Ventilspindel 2 ausgebildet, die seitlich zur Durchtrittsöffnung 31 offen ist. An der stromaufwärts angeordneten Stirnseite ist die Ventilregulierscheibe 4 mit ihrer Dichtfläche 42 angelagert. An der Ventilregulierscheibe 4 sind keine Vorsprünge vorgesehen, so daß sie im Gehäuse 1 drehbar gelagert ist. Sie weist dabei eine etwa der Durchtrittsöffnung 31 entsprechende Durchtrittsöffnung 43 als Kreisringsegment auf. Der äußere Kreisbogen 44 beträgt hierbei ebenfalls etwas unter 180° . Senkrecht zu der kreisringförmigen Durchtrittsöffnung ist von der Dichtflächenseite 42 aus eine nutförmige Aufnahme 41 ausgebildet, in die ein paßfederförmiger Exzenter 21 der Ventilspindel 2 in der Einbaustellung einfaßt. Die Aufnahme 41 erstreckt sich dabei vom Zentrum der Ventrilregulierscheibe 4 bis in den Randbereich, wobei die Abmessung so gewählt ist, daß eine hinreichende Überdeckung zwischen Ventilsitzscheibe 3 und Ventilregulierscheibe 4 eine wasserdichte Absperrung in der Schließstellung gewährleistet.
Damit die Ventilregulierscheibe 4 in jeder Betriebsstellung die erforderliche Mindestanpressung zur Ventilsitzscheibe 3 erfährt, ist außerdem die Feder 7 in Form einer Abdeckscheibe 71 stromaufwärts vor der Ventilregulierscheibe 4 angeordnet, Hierbei ist die Einlaßbohrung 16 im Gehäuse 1 noch einmal leicht sprunghaft erweitert, so daß die Feder 7 an einer Ringschulter 14 axial zur Anlage gelangt. In der Abdeckscheibe 71 ist eine zu den Durchtrittsöffnungen 31,43 etwa kongruente Durchtrittsöffnung 72 ausgebildet. Außerdem weist die Abdeckscheibe 41 Ohren 74 aus um 90° umgebogenen Laschen (siehe Figur 10) auf, die in die Axial nuten 13 einfassen und eine drehfeste Halterung im Gehäuse 1 gewährleisten. In der Abdeckscheibe 71 ist mit Hilfe von Einschnitten 75 ein Federarm 73 gebildet, der mit einem sphärisch ausgebildeten Endbereich 731 im Zentrum der Ventilregulierscheibe 4 an der stromaufwärts gelegenen Seite anliegt und so dimensioniert ist, daß die erforderliche Anpressung der Ventilscheiben sichergestellt ist.

Zur Drehbegrenzung der Ventilspindel 2 ist stromabwärts parallel zum Exzenter 21 ein Anschlagexzenter 22 an der Ventilspindel 2 ausgebildet, der mit entsprechenden Anschlagnasen 12, wie es insbesondere aus Figur 2 zu entnehmen ist, zusammenwirkt.

Die Montage des Absperr- und Regulierventils kann in folgender Weise erfolgen:
Zunächst wird die Ventilsitzscheibe 3 über den Exzenter 21 am Kopf 23 der Ventilspindel 2 übergestreift. Danach wird der Exzenter 21 in die Aufnahme 41 der Ventilregulierscheibe 4 eingeführt und die so zusammengefügte Baueinheit zusammen mit den Dichtringen 8 und 32 in die Durchgangsbohrung des Gehäuses 1 eingeführt bis die Ventilsitzscheibe 3 an der Schulter 18 zur Anlage gelangt ist. Im Anschluß daran kann die Abdeckscheibe 71 eingesetzt und zum Abschluß das Dichtelement 5 in die Einlaßöffnung 16 des Gehäuses 1 eingeschoben werden. Nunmehr kann mit einem Sprengring 24 die Ventilspindel 2 in ihrer axialen Lage im Gehäuse 1 fixiert werden.
Wird nun die in dem Gehäuse 1 gekapselte Baueinheit des Absperr- und Regulierventils in einen Armaturenkörper 6 mit dem Gewinde 11 eingeschraubt, so gelangt das Dichtelement 5 mit ihrem im Querschnitt V-förmig angeordneten, stirnseitigen Dichtlippen 51 an einen einen Einlaßkanal 61 im Armaturenkörper 6 umgebenden Ventilsitz 63 zur Anlage und bewirkt bei dem weiteren Einschraubvorgang eine dichte Verpressung zwischen der Außenwandung der Einlaßbohrung 16 des Gehäuses 1 und dem Ventilsitz 63, da das Dichtelement 5 stromabwärts axial von der Abdeckscheibe 71 abgestützt wird, die ihrerseits wieder an der Ringschulter 14 des Gehäuses 1 abgestützt ist.
Das aus dem Einlaßkanal 61 zugeführte Medium kann somit mit der Ventilregulierscheibe 4 abgesperrt bzw. nach einer Drehung der Ventilspindel 2 um 180° in den voll geöffneten Durchfluß gebracht werden, wobei das dann durch die Durchtrittsöffnungen 72,43,31 strömende Medium über radial angeordnete Austrittsöffnungen 19 stromabwärts hinter der Ventilsitzscheibe 3 aus dem Ventilgehäuse 1 austreten und von einem Auslaßkanal 62 des Armaturenkörpers 6 aufgenommen wird.

Die Ventilspindel 2, wie sie insbesondere aus Figur 7, 8 und 9 zu entnehmen ist, kann aus Preßmessing hergestellt werden, wobei der am Kopf 23 ausgebildete Exzenter 21 sowie der Anschlagexzenter 22 in einem Arbeitsgang hergestellt werden können. Durch die fußartige Ausbildung des Exzenters 21 können die Paßtoleranzen günstig gewählt werden, wobei trotzdem ein den Komfort beeinträchtigendes Totspiel vermieden wird.
Zur spielfreien Einpassung des Exzenters 21 in die Aufnahme 41 kann dieser mit einem Elastomer beschichtet sein oder ein z.B. aus Gummi bestehender Schuh auf den fußartigen Exzenter 21 aufgeknöpft werden.

Mit Hilfe der stromaufwärts vor der Ventilregulierscheibe 4 angeordneten Abdeckscheibe 71 wird neben der Halterung der Feder 7 noch erreicht, daß die Strömung des Fluids etwa parallel zur Mittelachse 15 gerichtet wird, so daß in Drosselstellung ein seitliches Anströmen vermieden ist, wodurch die Ventilregulierscheibe 4 sich in unerwünschter Weise selbsttätig verdrehen könnte. Darüber hinaus wird durch die Abdeckscheibe ein Auswaschen von zwischen den Ventilscheiben angeordneten Gleitmitteln reduziert.

## Patentansprüche

1. Absperr- und Regulierventil mit einem wenigstens eine axiale Einlaß- und eine radiale Auslaßöffnung (16;19) aufweisenden, in Armaturenkörper (6) einsetzbaren Gehäuse (1), in dem quer zur Längsachse (15) eine mit wenigstens einer Durchtrittsöffnung (31) versehene Ventilsitzscheibe (3) unverdrehbar gehalten ist und an der eine mit einer im Gehäuse (1) gelagerten Ventilspindel (2) verdrehbare Ventilregulierscheibe (4) an der stromaufwärts gelegenen Seite anliegt, wobei die Ventilregulierscheibe (4) mit Hilfe einer Feder (7) gegen die Ventilsitzscheibe (3) gestrammt ist, beide Ventilscheiben (3,4) von einer stromaufwärts gelegenen Einlaßöffnung (16) in das Gehäuse (1) einsetzbar sind und zwischen dem Zulaufkanal des Armaturenkörpers (6) und dem Gehäuse (1) ein Dichtelement (5) vorgesehen ist, dadurch gekennzeichnet, daß die Ventilspindel (2) am inneren Endbereich mit einem fußartigen Exzenter (21) ausgebildet ist, und daß die Ventilregulierscheibe (4) eine zur Dichtflächenseite offene Nut (41) aufweist, die durch die Ventilsitzscheibe (3) überdeckt ist und die als Aufnahme für den Exzenter (21) ausgebildet ist, der zur drehfesten Verbindung paßfederartig in diese Aufnahme (41) einfaßt, wobei in der Ventilsitzscheibe (3) wenigstens eine Durchtrittsöffnung (31) derart bemessen ist, daß die Ventilspindel (2) mit dem Exzenter (21) hindurchführbar ist.

2. Absperr- und Regulierventil nach Anspruch 1, dadurch gekennzeichnet, daß der Exzenter (21) einstückig mit der Ventilspindel (2) ausgebildet ist.

3. Absperr- und Regulierventil nach Anspruch 1 oder 2, dadurch gekennzeichnet, daß parallel aber axial versetzt zu dem Exzenter (21) ein Anschlagexzenter (22) an der Ventilspindel (2) ausgebildet ist, der mit Anschlagnasen (12) im Gehäuse (1) zur Drehbegrenzung zusammenwirkt.

4. Absperr- und Regulierventil nach wenigstens einem der Ansprüche 1 bis 3, dadurch gekennzeichnet, daß die Feder (7) zur Andrückung der Ventilregulierscheibe (4) als stromaufwärts liegende Abdeckscheibe (71) ausgebildet ist, deren Durchtrittsöffnung (72) etwa der Durchtrittsöffnung (43) in der Ventilregulierscheibe (4) entspricht, wobei ein ins Zentrum der Ventilregulierscheibe (4) reichender Federarm (73) vorgesehen ist, der am Randbereich in die Abdeckscheibe (71) übergeht, im übrigen aber zur Abdeckscheibe (71) federnd bewegbar ist.

5. Absperr- und Regulierventil nach Anspruch 4, dadurch gekennzeichnet, daß die Feder (7) an ihrem kreisförmigen Randbereich vorstehende Ohren (74) trägt, die in Axialnuten (13) einfassen, die außerdem die Ventilsitzscheibe (3) im Gehäuse (1) drehfest halten, wobei die Feder (7) an einer Ringschulter (14) im Gehäuse (1) anliegt, die auch das Dichtelement (5) axial zur Ventilregulierscheibe (4) abstützt.

6. Absperr- und Regulierventil nach wenigstens einem der Ansprüche 1 bis 5, dadurch gekennzeichnet, daß der Exzenter (21) zur spielfreien Verbindung mit der Aufnahme (41) in der Ventilregulierscheibe (4) mit einem Elastomer beschichtet ist.

7. Absperr- und Regulierventil nach einem der Ansprüche 1 bis 5, dadurch gekennzeichnet, daß zur spielfreien Verbindung des Exzenters (21) mit der Aufnahme (41) ein aufknöpfbarer Schuh aus Elastomer vorgesehen ist.

8. Absperr- und Regulierventil nach einem der Ansprüche 1 bis 7, dadurch gekennzeichnet, daß der Exzenter (21) eine radiale Länge von etwa dem 2,5-fachen Durchmesser des Kopfes (23) der Ventilspindel (2) aufweist.

9. Absperr- und Regulierventil nach Anspruch 8, dadurch gekennzeichnet, daß der Kopf (23) der Ventilspindel (2) einen Durchmesser von etwa 3 mm und die Aufnahme (41) eine Länge von etwa 10 mm aufweist.

10. Absperr- und Regulierventil nach wenigstens einem der Ansprüche 1 bis 9, dadurch gekennzeichnet, daß eine kreisringsegmentförmige Durchtrittsöffnung (43) in der Ventilregulierscheibe (4) ausgebildet ist, deren Kreisbogen (44) geringfügig unterhalb 180° beträgt, und die Aufnahme (41) etwa senkrecht zur Basis des Kreisbogens (44) angeordnet ist.

## Claims

1. A shut-off and regulating valve with a housing (1) having at least one axial inlet opening and one radial outlet opening (16; 19), which housing is arranged to be inserted in fitting bodies (6), a valve seat disc (3) provided with at least one through-opening (31) being held in the housing transversely to the longitudinal axis (15) so that it cannot rotate and a valve-regulating disc (4) rotatable with a valve shaft (2) mounted in the housing (1) being positioned on the valve seat disc on the upstream side thereof, wherein the valve-regulating disc (4) is clamped by means of a spring (7) against the valve seat disc (3), both valve discs (3, 4) are arranged to be inserted into the housing (1) from an inlet opening (16) arranged upstream, and between the inlet channel of the fitting body (6) and the housing (1) there is provided a sealing element (5), characterized in that the valve shaft (2) is constructed at its inner end region with a foot-like eccentric member (21) and the valve-regulating disc (4) has a channel (41) open towards the sealing face side which is covered over by the valve seat disc (3) and is constructed as a seat for the eccentric member (21) which engages in the seat (41) in the manner of a featherkey for ensuring a connection without relative rotation, wherein in the valve seat disc (3) there is at least one through-opening (31) so dimensioned that the valve shaft (2) with its eccentric member (21) can be guided through.

2. A shut-off and regulating valve according to claim 1, characterized in that the eccentric body (21) is integrally constructed with the valve shaft (2).

3. A shut-off and regulating valve according to claim 1 or 2, characterized in that there is constructed on the valve shaft (2), parallel with but axially displaced with respect to the eccentric member (21), an eccentric stop member (22) which co-operates with stop projections (12) in the housing (1) to limit rotation.

4. A shut-off and regulating valve according to at least one of claims 1 to 3, characterized in that the spring (7) for acting on the valve-regulating disc (4) is in the form of an upstream covering disc (71), the through-opening (72) of which corresponds approximately to the through-opening (43) in the valve regulating disc (4), a spring arm (73) being provided which extends to the centre of the valve regulating disc (4) and which continues at the edge region as the covering disc (71) and moreover is resiliently movable with respect to the covering disc (71).

5. A shut-off and regulating valve according to claim 4, characterized in that, at its circular edge region, the spring (7) carries projections (74) which engage in axial grooves (13), which grooves also hold the valve seat disc (3) in the housing (1) so that it cannot rotate, the spring (7) resting against an annular shoulder (14) in the housing (1) which also supports the sealing element (5) axially with respect to the valve regulating disc (4).

6. A shut-off and regulating valve according to at least one of claims 1 to 5, characterized in that the eccentric member (21) is coated with an elastomer for connection free from play with the seat (41) in the valve-regulating disc (4).

7. A shut-off and regulating valve according to one of claims 1 to 5, characterized in that, for the connection of the eccentric member (21) free from play with the seat (41), a snap-on shoe of elastomer is provided.

8. A shut-off and regulating valve according to one of claims 1 to 7, characterized in that the eccentric member (21) has a radial length of about 2.5 times the diameter of the head (23) valve shaft (2).

9. A shut-off and regulating valve according to claim 8, characterized in that the head (23) of the valve shaft (2) has a diameter of about 3 mm and the seat (41) has a length of about 10 mm.

10. A shut-off and regulating valve according to at least one of claims 1 to 9, characterized in that a circular segment-shaped through-opening (43) is formed in the valve regulating disc (4), the circular arc (44) of which is slightly less than 180 , and the seat (41) is arranged approximately at right angles to the base of the circular arc (44).

## Revendications

1. Elément de robinet d'arrêt et de régulation comportant un boîtier (1) avec au moins un orifice d'entrée axial et un orifice de sortie radial (16 ; 19), ce boîtier se plaçant dans un corps de robinet (6), et comporte transversalement à l'axe longitudinal (15) un disque de soupape (3) muni d'au moins un orifice de passage (31), ce disque étant maintenu bloqué en rotation, et la tige de robinet (2) montée dans le boîtier (1) porte un disque de régulation de soupape (4), susceptible de tourner, s'appliquant contre le côté amont, le disque de régulation (4) étant poussé par un ressort (7) contre le disque formant siège de soupape (3), les deux disques de soupape (3, 4) s'introduisant dans le boîtier (1) par un orifice d'entrée (16) situé en amont et entre le canal d'alimentation du corps de robinet (6) et le boîtier (1) est prévu un élément d'étanchéité (5),
caractérisé en ce que
la tige de soupape (2) est munie à sa zone d'extrémité intérieure d'un excentrique (21) en forme de talon et en ce que le disque de régulation de soupape (4) présente une rainure (41) ouverte vers le côté de la surface d'étanchéité, cette rainure étant couverte par le disque formant siège de soupape (3) et est réalisée comme lcgement pour l'excentrique (21) en étant enserrée dans ce logement (4) pour une liaison solidaire en rotation à la manière d'une clavette, le disque formant siège de soupape (3) ayant au moins un orifice de passage (31) dimensionné pour que la tige de soupape (2) puisse passer avec l'excentrique (21).

2. Elément de robinet d'arrêt et de régulation selon la revendication 1, caractérisé en ce que l'excentrique (21) fait corps avec la tige de soupape (2).

3. Elément de robinet d'arrêt et de régulation selon la revendication 1 ou 2, caractérisé en ce qu'un excentrique de butée (22) est réalisé sur la tige de soupape (2), cet excentrique étant parallèle mais décalé axialement par rapport à l'excentrique (21), et il coopère avec des becs de butée (12) du boîtier (1) pour limiter le mouvement de rotation.

4. Elément de robinet d'arrêt et de régulation selon au moins l'une des revendications 1 à 3, caractérisé en ce que le ressort (7) pressant le disque de régulation (4) est en forme de rondelle de recouvrement (71) située en amont et dont l'ouverture de passage (72) correspond sensiblement à l'ouverture de passage (43) du disque de régulation (4), un bras de ressort (73) étant prévu pour arriver jusqu'au centre du disque de régulation (4), ce bras rejoignant au bord le disque de recouvrement (71) en étant pour le reste mobile élastiquement par rappprt au disque de recouvrement (71).

5. Elément de robinet d'arrêt et de régulation selon la revendication 4, caractérisé en ce que le resscrt (7) porte à sa zone de bord circulaire, des oreilles (74) en saillie qui viennent prendre dans des rainures axiales (13) maintenant en outre le disque de siège de soupape (3) bloqué en rotation dans le boîtier (1), le ressort (7) s'appuyant contre un épaulement annulaire (14) dans le boîtier (1) qui appuie également l'élément d'étanchéité (5) axialement contre le disque de régulation (4).

6. Elément de robinet d'arrêt et de régulation selon au moins l'une des revendications 1 à 5, caractérisé en ce que l'excentrique (21) est revêtu d'un élastomère pour coopérer sans jeu avec le logement (41) du disque de régulation (4).

7. Elément de robinet d'arrêt et de régulation selon l'une des revendications 1 à 5, caractérisé en ce que pour relier l'excentrique (21) sans jeu avec le logement (41) il porte une garniture enclipsable en élastomère.

8. Elément de robinet d'arrêt et de régulation selon l'une des revendications 1 à 7, caractérisé en ce que l'excentrique (21) a une longueur radiale correspondant à environ 2,5 fois le diamètre de la tête (23) de la tige de soupape (2).

9. Elément de robinet d'arrêt et de régulation selon la revendication 8, caractérisé en ce que la tête (23) de la tige de soupape (2) a un diamètre d'environ 3 mm et le logement (41) a une longueur de l'ordre de 10 mm.

10. Elément de robinet d'arrêt et de régulation selon au moins l'une des revendications 1 à 9, caractérisé en ce qu'un orifice de passage (43) en forme de segment d'anneau de cercle est réalisé dans le disque de régulation de soupape (4), dont les arcs (44) sont légèrement inférieurs à 180° et le logement (41) est sensiblement perpendiculaire à la base de l'arc de cercle (44).
